# EUROPEAN PATENT APPLICATION

(11) **EP 4 633 094 A1**
(43) Date of publication of application: **15.10.2025**
(21) Application number: 22967616.8
(22) Date of filing: 09.12.2022
(51) Int. Cl.: H04L 27/00, H04W 72/12

(54) **WIRELESS COMMUNICATION METHOD AND APPARATUS, AND DEVICE, STORAGE MEDIUM AND PROGRAM PRODUCT**

(71) Applicant: GUANGDONG OPPO MOBILE TELECOMMUNICATIONS CORP., LTD., Dongguan, Guangdong 523860 (CN)
(72) Inventor: DU, Zhongda, Dongguan, Guangdong 523860 (CN)
(74) Representative: Novagraaf Technologies
(86) International application number: PCT/CN2022/137834
(87) International publication number: WO 2024/119463

(57) **Abstract**

The present application relates to the technical field of communications. Disclosed are a wireless communication method and apparatus, and a device, a storage medium and a program product. The method comprises: a terminal device using an autonomously selected first radio resource to send to a network device a first transport block and HARQ information corresponding to the first transport block, and indicating an identifier of the terminal device to the network device (210). For a scenario where a terminal device autonomously selects a radio resource for data transmission, provided in the present application is an HARQ communication method. In the method, when using an autonomously selected radio resource to send to a network device a transport block and HARQ information corresponding to the transport block, a terminal device indicates an identifier of the terminal device to the network device, such that after receiving the transport block, the network device can learn of which terminal device sends the transport block, thereby ensuring that subsequent HARQ feedback can be performed smoothly, and thus improving the reliability of data sending when there is a potential conflict.

## Description

### TECHNICAL FIELD

Embodiments of the present disclosure relate to the technical field of wireless communications, and in particular, relate to a method and apparatus for wireless communication, and a device, a storage medium and a program product thereof.

### RELATED ART

A terminal device needs to perform uplink data transmission over a wireless resource. In a related art, a network device may configure a shared wireless resource pool for the terminal device, and the terminal device autonomously selects a wireless resource from the shared wireless resource pool to perform uplink data transmission.

In the above scenario, how to transmit hybrid automatic repeat request (HARQ) information remains a challenge that requires further research.

### SUMMARY

The embodiments of the present disclosure provide a method and apparatus for wireless communication, and a device, a storage medium and a program product thereof. The technical solutions are as follows.

According to an aspect of the present disclosure, a method for wireless communication is provided. The method is applicable to a terminal device, and the method includes: transmitting a first transport block and HARQ information corresponding to the first transport block to a network device over a first wireless resource, and indicating an identifier of the terminal device to the network device, wherein the first wireless resource is autonomously selected by the terminal device.

According to an aspect of the present disclosure, a method for wireless communication is provided. The method is applicable to a network device, and the method includes: receiving a first transport block and HARQ information corresponding to the first transport block from a terminal device, and determining an identifier of the terminal device based on the received information, wherein the first transport block and the HARQ information corresponding to the first transport block are transmitted by the terminal device over a first wireless resource, the first wireless resource being autonomously selected by the terminal device.

According to an aspect of the present disclosure, an apparatus for wireless communication is provided. The apparatus includes: a transceiving module, configured to transmit a first transport block and HARQ information corresponding to the first transport block to a network device over a first wireless resource, and indicate an identifier of a terminal device to the network device, wherein the first wireless resource is autonomously selected by the apparatus.

According to an aspect of the present disclosure, an apparatus for wireless communication is provided. The apparatus includes: a receiving module, configured to receive a first transport block and HARQ information corresponding to the first transport block from a terminal device, and determine an identifier of the terminal device based on the received information, wherein the first transport block and the HARQ information corresponding to the first transport block are transmitted by the terminal device over a first wireless resource, the first wireless resource being autonomously selected by the terminal device.

According to an aspect of the present disclosure, a communication device is provided. The communication device includes: a processor and a memory; wherein the memory is configured to store at least one computer program; and the processor is configured to run the at least one computer program, to cause the communication device to perform the method performed by the terminal device or the method performed by the network device.

According to an aspect of the present disclosure, a computer-readable storage medium is provided. The computer-readable storage medium stores at least one computer program, wherein the at least one computer program, when run by a processor, causes the processor to perform the method performed by the terminal device or the method performed by the network device.

According to an aspect of the present disclosure, a chip is provided. The chip includes at least one programmable logic circuit and/or at least one program instruction, wherein the chip, when running, is caused to perform the method performed by the terminal device or the method performed by the network device.

According to an aspect of the present disclosure, a computer program product is provided. The computer program product includes at least one computer program stored in a computer-readable storage medium; wherein a processor, when reading and running the at least one computer program from the computer-readable storage medium, is caused to perform the method performed by the terminal device or the method performed by the network device.

According to an aspect of the present disclosure, a communication system is provided. The communication system includes: a terminal device and a network device; wherein the terminal device is configured to perform the method performed by the terminal device, and the network device is configured to perform the method performed by the network device.

The technical solutions according to the embodiments of the present disclosure have at least the following beneficial effects.

In the scenario where the terminal device autonomously selects a wireless resource for data transmission, when the terminal device transmits a transport block and HARQ information corresponding to the transport block to the network device over the autonomously selected wireless resource, the terminal device indicates an identifier of the terminal device to the network device, such that the network device knows, subsequent to receiving the transport block, which terminal device the transport block is transmitted from, thereby ensuring that the HARQ feedback can be performed smoothly subsequently and improving the reliability of data transmission in the case of potential collision.

### BRIEF DESCRIPTION OF DRAWINGS

FIG. 1 is a schematic diagram of a network architecture according to some embodiments of the present disclosure;
FIG. 2 is a flowchart of a method for wireless communication according to some embodiments of the present disclosure;
FIG. 3 is a schematic diagram of explicit feedback according to some embodiments of the present disclosure;
FIG. 4 is a schematic diagram of explicit feedback according to some embodiments of the present disclosure;
FIG. 5 is a schematic diagram of implicit feedback according to some embodiments of the present disclosure;
FIG. 6 is a schematic diagram of implicit feedback according to some other embodiments of the present disclosure;
FIG. 7 is a schematic diagram of timeout-based retransmission according to some embodiments of the present disclosure;
FIG. 8 is a schematic diagram of backoff-based retransmission according to some embodiments of the present disclosure;
FIG. 9 is a schematic diagram of monitoring-based retransmission according to some embodiments of the present disclosure;
FIG. 10 is a flowchart of a method for wireless communication according to some other embodiments of the present disclosure;
FIG. 11 is a block diagram of an apparatus for wireless communication according to some embodiments of the present disclosure;
FIG. 12 is a block diagram of an apparatus for wireless communication according to some embodiments of the present disclosure;
FIG. 13 is a schematic structural diagram of a terminal device according to some embodiments of the present disclosure; and
FIG. 14 is a schematic structural diagram of a network device according to some embodiments of the present disclosure.

### DETAILED DESCRIPTION

For clearer descriptions of the objectives, technical solutions, and advantages of the present disclosure, the embodiments of the present disclosure are further described in detail hereinafter with reference to the accompanying drawings.

The network architecture and services scenarios described in the embodiments of the present disclosure are intended to describe the technical solutions according to the embodiments of the present disclosure more clearly, but do not constitute limitations on the technical solutions according to the embodiments of the present disclosure. Those of ordinary skill in the art may understand that, with the evolution of the network architecture and the emergence of new services scenarios, the technical solutions according to the embodiments of the present disclosure are also applicable to similar technical problems.

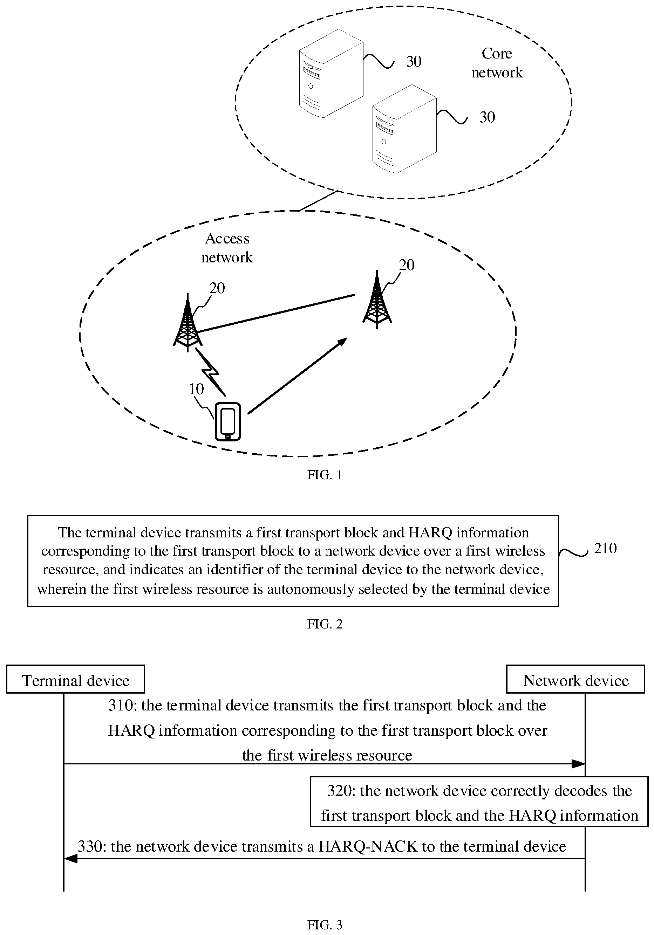

FIG. 1 is a schematic diagram of a network architecture according to some embodiments of the present disclosure. The network architecture may involve a terminal device 10, an access network device 20, and a core network device 30.

The terminal device 10 may be a user equipment (UE), an access terminal, a subscriber unit, a subscriber station, a mobile station, a mobile platform, a remote station, a remote terminal, a mobile device, a wireless communication device, a user agent, or a user apparatus. In some embodiments, the terminal device 10 may also be a cellular phone, a cordless phone, a Session Initiation Protocol (SIP) phone, a wireless local loop (WLL) station, a personal digital assistant (PDA), a handheld device with a wireless communication function, a computing device or another processing device connected to a wireless modem, a vehicle-mounted device, a wearable device, a terminal device in a 5G system, a terminal device in an evolved public land mobile network (PLMN), or the like, which is not limited in the embodiments of the present disclosure. For the convenience of description, the devices mentioned above are collectively referred to as the terminal device. A plurality of terminal devices 10 are usually deployed. At least one terminal device 10 may be distributed in a cell managed by each access network device 20. In the embodiments of the present disclosure, the "terminal device" and the "UE" are generally used interchangeably, and those skilled in the art shall understand that the two generally have the same meaning.

The access network device 20 is a device deployed in an access network to provide a wireless communication function for the terminal device 10. The access network device 20 may include various forms of macro base stations, micro base stations, relay stations, access points, and the like. In systems employing different radio access technologies, devices with the function of the access network device may have different names, for example, gNodeB or gNB in a 5G NR system. As the communication technologies evolve, the name "access network device" may change. For the convenience of description, in the embodiments of the present disclosure, the above apparatuses providing the wireless communication function for the terminal device 10 are collectively referred to as the access network device. In some embodiments, a communication relationship may be established between the terminal device 10 and the core network device 30 using the access network device 20. For example, in an LTE system, the access network device 20 may be an evolved universal terrestrial radio access network (EUTRAN) or at least one eNodeB in the EUTRAN. In a 5G new radio (NR) system, the access network device 20 may be a radio access network (RAN) or at least one gNB in the RAN. In the embodiments of the present disclosure, unless otherwise specified, the term "network device" is the access network device 20, e.g., a base station.

The core network device 30 is a device deployed in a core network. The core network device 30 mainly functions to provide a user connection, user management and service bearing, and to provide an interface to an external network as a bearer network. For example, core network devices in the 5G NR system may include devices such as an access and mobility management function (AMF) entity, a user plane function (UPF) entity, and a session management function (SMF) entity.

In some embodiments, the access network device 20 communicates with the core network device 30 using a specific air interface technology, e.g., an NG interface in the 5G NR system. The access network device 20 communicates with the terminal device 10 using a specific air interface technology, e.g., over a Uu interface.

The "5G NR system" in the embodiments of the present disclosure may also be referred to as a 5G system or an NR system, but those skilled in the art may understand its meaning. The technical solutions according to the embodiments of the present disclosure may be applicable to the LTE system, the 5G NR system, an evolved system subsequent to the 5G NR system, a narrowband Internet of things (NB-IoT) system, and other communication systems. This is not limited in the present disclosure.

In the embodiments of the present disclosure, the network device provides services for a cell. The terminal device communicates with the network device over a transmission resource (for example, a frequency-domain resource or a spectrum resource) on a carrier used by the cell. The cell may be a cell corresponding to the network device (for example, the base station). The cell may belong to a macro base station or a base station corresponding to a small cell. The small cell herein may include a metro cell, a micro cell, a pico cell, a femto cell, and the like. These small cells have the characteristics of small coverage and low transmit power, and are applicable to providing high-rate data transmission services.

In the communication system, when a terminal device needs to transmit data, the terminal device needs to first transmit a scheduling request message to a network device, and the network device schedules, based on the acquired scheduling request message, the terminal device to transmit one protocol data unit (PDU). The PDU includes buffer scheduling information of the terminal device, and the network device schedules, based on the acquired buffer scheduling information, the terminal device to transmit data.

In this method, the wireless resources over which the terminal device transmits the PDU of the buffer information and the PDU of a data packet are dedicated to the scheduled terminal device, and no collision is present between the wireless resources. However, this method may result in a long user plane latency, and prior to transmitting data, the terminal device needs to perform a handshake procedure with the network device. In applications where data packets arrive more continuously, the latency is not serious because the PDUs subsequently transmitted may also carry buffer information. However, in some applications where data packets arrive discontinuously, the terminal device may transmit scheduling requests frequently, resulting in an additional user plane latency.

Some improvement measures are taken in the related art. For example, the network device informs in advance the terminal device of the pattern or configuration of the wireless resource for transmit data. When the terminal device needs to transmit a data packet, the terminal device uses the preconfigured wireless resources for data transmission to avoid the transmission of a scheduling request. Because the network device does not know whether the terminal device may transmit data at the informed time, the network device may have to use a conservative wireless resource scheduling algorithm, resulting in a waste of wireless resources, which is a primary drawback of this method.

The main motivation behind the prior art is that the wireless resource used by the terminal device to transmit data packet needs be exclusive to avoid collisions of wireless resources between any two terminal devices in the same cell, which is necessary in a case where the network device has a large coverage and a frequency band of the carrier used by the network device is relatively low, because such a cell is generally used for a macro cell with a large coverage and many terminal devices are present in the cell, and thus it is necessary to resolve the collision.

However, with the continuous iterative development of the wireless communication system, in a new wireless communication system, generally new frequency spectrums are added in addition to re-farming wireless frequency resources under use (refarming herein means that the wireless frequency resources are reused). For example, the 5G system re-farms (reuses) frequency bands below 2 GHz that are used in the 2G, 3G and 4G systems, and at the same time the 5G system networks widely at new frequency bands such as 3.5 GHz. One of the main reasons is that the bandwidth exceeds 100 MHz at a frequency band of 3.5 GHz in many countries. To reduce overheads, operators take various measures to make the coverage of the 3.5 GHz frequency band equivalent to the coverage of previous systems to take full advantage of the hardware and basic infrastructure of the previous systems. However, this measure cannot be taken for all frequency bands, for example, a millimeter wave may only cover hotspot regions. Due to the radio wave propagation characteristics of the millimeter wave, the millimeter wave may only cover limited regions. For example, the number of terminal devices being served in a cell with a radius of tens of meters is much less than the number of terminal devices being served in a macro cell (about hundreds of meters to tens of kilometers).

Under this situation, the probability of collisions between terminal devices when accessing to the same wireless resource pool is significantly reduced. Even if a collision occurs, some technical measures, e.g., an HARQ retransmission mechanism, may still be taken to increase the probability of success. Assuming that the current probability of collisions of the wireless resource pool used by the terminal devices is 10% and a block error rate (BLER) of the HARQ is also 10%, then the success rate of each transmission is 91% (90%×90%), whereas the failure rate is 19%. In a case where at most two times of retransmissions (a total of three times of transmissions including the initial transmission) are performed in one HARQ process, the failure rate after three times of transmissions is 0.6859%. This is mainly due to the lower probability of minor collisions in the wireless resource pool.

Under this context, the present disclosure provides a method for wireless communication. In this method, in a scenario where the terminal device autonomously selects a wireless resource for data transmission, when the terminal device transmits a transport block and HARQ information corresponding to the transport block to the network device over the autonomously selected wireless resource, the terminal device indicates an identifier of the terminal device to the network device, such that the network device knows, subsequent to receiving the transport block, which terminal device the transport block is transmitted from, thereby ensuring that the HARQ feedback is performed smoothly subsequently and improving the reliability of data transmission in the case of potential collision.

FIG. 2 illustrates a flowchart of a method for wireless communication according to some embodiments of the present disclosure. This method is applicable to the network architecture illustrated in FIG. 1. For example, the processes may be performed by a terminal device. This method includes the following process.

In process 210, the terminal device transmits a first transport block and HARQ information corresponding to the first transport block to a network device over a first wireless resource, and indicates an identifier of the terminal device to the network device, wherein the first wireless resource is autonomously selected by the terminal device.

In some embodiments, the first transport block includes user data. The transport block (TB) is a unit of data transmission. The HARQ information corresponding to the first transport block controls an HARQ process of the first transport block.

In some embodiments, the HARQ information includes at least one of an HARQ process identifier (ID), a new data indicator (NDI), or the like. The HARQ process ID is also referred to as an HARQ process number, which uniquely identifies an HARQ process.

In some embodiments, the HARQ information selectively carries the HARQ process ID, and whether the HARQ information carries the HARQ process ID is related to whether a transport block is retransmitted during a wireless communication process.

In some embodiments, the terminal device and the network device agree that retransmission is not performed during data transmission, and in this case, the HARQ information does not carry the HARQ process ID. That is, assuming that the terminal device and the network device implement the agreement that only one HARQ process, e.g., an HARQ process with an ID of 0, is performed for a transport block, the HARQ process ID is omitted in the HARQ information.

In some embodiments, the terminal device and the network device implement the agreement that more than one HARQ process is performed for a transport block (the transport block is transmitted and received in the same manner), and in this case, the HARQ information needs to carry the HARQ process ID. For example, in the scenario where a high requirement for communication reliability is present, the terminal device and the network device agree that retransmission is needed during data transmission, and in this case, the HARQ information includes the HARQ process ID.

The NDI indicates whether scheduled data is transmitted initially or retransmitted. In some embodiments, the NDI is represented by a character of 1 bit. Flipping of the NDI (e.g., flip from 0 to 1 or from 1 to 0) represents that the HARQ process is an initial transmission of a new transport block.

In some embodiments, the transport blocks and the HARQ information are in one-to-one corresponding relationship, that is, different transport blocks correspond to different HARQ information. In some embodiments, the HARQ information corresponding to the first transport block is generated by a medium access control (MAC) layer of the terminal device.

The first wireless resource is autonomously selected by the terminal device and the first wireless resource is used to transmit the first transport block and the HARQ information corresponding to the first transport block. In some embodiments, the first wireless resource includes a time domain resource and a frequency domain resource, which are referred to as time-frequency resources for short.

In some embodiments, the terminal device autonomously selects the first wireless resource from a wireless resource pool. The wireless resource pool includes at least one wireless resource used for wireless communication. In some embodiments, the wireless resource pool used by the terminal device is preconfigured or configured by the network device. For example, the network device configures the wireless resource pool for the terminal device over radio resource control (RRC) signaling.

In some embodiments, the wireless resource pool is shared by a plurality of terminal devices in the serving cell corresponding to the network device, that is, any terminal device located in the serving cell corresponding to the network device is capable of selecting a wireless resource used for uplink transmission from the wireless resource pool, thereby improving the utilization rate of resources in the wireless resource pool.

In some embodiments, the terminal device is configured with a machine learning algorithm, wherein the machine learning algorithm is used to determine whether the terminal device is capable of transmitting a transport block and the HARQ information corresponding to the transport block to the network device over a wireless resource in the wireless resource pool at a certain moment. In some embodiments, the mode that the terminal device determines, using the machine learning algorithm, to transmit uplink data over the wireless resource in the wireless resource pool is referred to as an autonomous transmission mode. In the case where the terminal device determines, using the machine learning algorithm, that the terminal device is capable of transmitting uplink data in the autonomous transmission mode at a certain moment, the terminal device selects the first wireless resource from the wireless resource pool and transmits the first transport block and the HARQ information corresponding to the first transport block over the first wireless resource.

In the case where the terminal device determines, using the machine learning algorithm, that the terminal device is incapable of transmitting uplink data in the autonomous transmission mode at a certain moment, the terminal device does not transmit the first transport block and the HARQ information corresponding to the first transport block at this moment. In some embodiments, the terminal device redetermines, using the machine learning algorithm, another moment at which the terminal device is capable of transmitting the first transport block in the autonomous transmission mode.

In some embodiments, the terminal device determines, using the machine learning algorithm, the first wireless resource from the wireless resource pool. For example, the terminal device takes the resource occupancy result monitored in n time units prior to a certain moment as an input of the machine learning algorithm, and acquires the first wireless resource autonomously selected from the wireless resource pool using the machine learning algorithm, wherein n is a positive integer. In some embodiments, the terminal device transmits the first transport block and the HARQ information over the first wireless resource at this moment.

In some embodiments, because the terminal device transmits data in the autonomous transmission mode, a collision may occur, that is, there is a collision in data transmission between the terminal device and another terminal device. To solve this problem, the terminal device sets a timer corresponding to the first transport block to monitor the initial transmission or retransmission of the first transport block. For the specific contents of this procedure, reference may be made to the following embodiments.

In some embodiments, the terminal device transmits the first transport block and the HARQ information corresponding to the first transport block over different channels. In some embodiments, the terminal device transmits the first transport block over a physical uplink shared channel (PUSCH), and transmits the HARQ information corresponding to the first transport block over a physical uplink control channel (PUCCH). In some embodiments, a corresponding relationship is present between the wireless resources on the PUSCH and the wireless resources on the PUCCH, and the terminal device transmits the first transport block over a wireless resource on the PUSCH, and determines the wireless resource used to transmit the HARQ information corresponding to the first transport block from the PUCCH based on the corresponding relationship.

In some embodiments, the corresponding relationship between the wireless resources on the PUCCH and the wireless resources on the PUSCH is preconfigured.

In some embodiments, the terminal device transmits the first transport block and the HARQ feedback information corresponding to the first transport block over the same channel. For example, the terminal device transmits the first transport block and the HARQ feedback information corresponding to the first transport block over the PUSCH.

In some embodiments, in the case where an RRC connection is established between the terminal device and the network device, the terminal device transmits the first transport block over the PUSCH and transmits the HARQ feedback information corresponding to the first transport block over the PUCCH.

In some embodiments, in order to balance the success rate of data transmission and saving of wireless communication resources, the terminal device uses different coding schemes for the first transport block and the HARQ feedback information corresponding to the first transport block. For the specific contents of this procedure, reference may be made to the following embodiments.

It should be noted that the channels over which the terminal device transmits the first transport block and the HARQ information corresponding to the first transport block are determined based on actual needs, which are not limited in the present disclosure.

In some embodiments, in addition to transmitting the first transport block and the HARQ information corresponding to the first transport block to the network device, the terminal device further indicates the identifier of the terminal device to the network device, such that the network device is capable of determining the transmitter of the first transport block based on the identifier of the terminal device.

In some embodiments, the identifier of the terminal device uniquely identifies the terminal device. In some embodiments, the terminal devices located in the same serving cell of the network device have different identifiers. In some embodiments, different terminal devices have different identifiers. For example, the identifier of terminal device 1 is a, the identifier of terminal device 2 is b, and a is different from b. In some embodiments, the identifier of the terminal device includes, but is not limited to, a MAC address, a radio network temporary identity

(RNTI), a subscription permanent identifier (SUPI), a subscription concealed identifier (SUCI), a serial number of the terminal device, or the like, which is not limited in the present disclosure.

In some embodiments, indicating, by the terminal device, the identifier of the terminal device to the network device includes at least one of: carrying the identifier of the terminal device in the first transport block, carrying the identifier of the terminal device in the HARQ information, or individually transmitting the identifier of the terminal device to the network device.

In some embodiments, the HARQ information corresponding to the first transport block includes the identifier of the terminal device. The network device acquires the identifier of the terminal device by performing operations such as demodulation and decoding on the received HARQ information corresponding to the first transport block. For the specific contents of this procedure, reference may be made to the following embodiments.

In summary, in the scenario where the terminal device autonomously selects a wireless resource for data transmission, when the terminal device transmits the transport block and the HARQ information corresponding to the transport block to the network device over the autonomously selected wireless resource, the terminal device indicates the identifier of the terminal device to the network device, such that the network device knows, subsequent to receiving the transport block, which terminal device the transport block is transmitted from, thereby ensuring that the HARQ feedback is performed smoothly subsequently and improving the reliability of data transmission in the case of potential collision.

In some embodiments, the HARQ information includes the identifier of the terminal device, or control information including the HARQ information includes the identifier of the terminal device.

In some embodiments, the identifier of the terminal device and the HARQ information are transmitted in the same way. For example, the identifier of the terminal device is transmitted in together with the HARQ information.

In some embodiments, the HARQ information includes the identifier of the terminal device and at least one of an HARQ process ID or an NAI.

In some embodiments, the control information is used to control a data transmission process between the terminal device and the network device. In some embodiments, the control information includes at least one of the HARQ information, the identifier of the terminal device or decoding information. In some embodiments, the control information from the terminal device is also referred to as uplink control information (DCI).

In some embodiments, the decoding information indicates to perform a decoding operation on a received code stream, such that the first transport block and the HARQ information corresponding to the first transport block are acquired by decoding the received code stream. In some embodiments, the decoding information includes a modulation scheme and a channel coding scheme.

In some embodiments, the modulation scheme includes, but is not limited to, at least one of amplitude-shift keying, frequency-shift keying, phase-shift keying or subcarrier modulation. It should be noted that the specific contents of the control information are set based on actual situations, which are not limited in the present disclosure.

In some embodiments, the HARQ information is included in the control information, and the terminal device transmits the first transport block and the control information corresponding to the first transport block to the network device over the first wireless resource.

In some embodiments, the terminal device transmits the first transport block and the control information corresponding to the first transport block over different channels, or the terminal device transmits the first transport block and the control information corresponding to the first transport block over the same channel.

In some embodiments, the control information corresponding to the first transport block is transmitted over the PUCCH or the PUSCH.

In some embodiments, the manner of indicating the identifier of the terminal device is configured by the network device.

The identifier of the terminal device is included in the HARQ information or the control information, such that the network device is capable of determining the identity of the terminal device based on the identification information, thereby ensuring that various forms of HARQ transmissions can be performed smoothly between the terminal device and the network device, and improving the reliability of data transmission in the case of potential collision.

In some embodiments, the identifier of the terminal device is indicated in an implicit manner.

In some embodiments, indicating, by the terminal device, the identifier of the terminal device in the implicit manner includes: implicitly indicating the identifier of the terminal device in the first transport block. For example, terminal device implicitly indicates the identifier of the terminal device in the first transport block by convoluting the identifier of the terminal device in the transport block.

In some embodiments, indicating, by the terminal device, the identifier of the terminal device in the implicit manner includes: implicitly indicating the identifier of the terminal device in the HARQ information. For example, the terminal device implicitly indicates the identifier of the terminal device in the HARQ information by convoluting the identifier of the terminal device in the HARQ information.

Subsequent to receiving the first transport block or the HARQ information convoluted with the identifier of the terminal device, the network device determines the identifier of the terminal device that transmits the first transport block by performing fast blind decoding based on the context related to the terminal device in the serving cell in the decoding process.

In some embodiments, the convolution method of the identifier of the terminal device is indicated by the network device. For example, the network device indicates to convolute the identifier of the terminal device in a transport block, and in this case, the network device, subsequent to receiving a transport block, extracts the identifier of the terminal device from the transport block, and determines which terminal device the transport block is transmitted from.

In some embodiments, the identifier of the terminal device corresponds to an implicit identifier, and the terminal device indicates the identifier of the terminal device in the implicit indication manner by carrying the implicit identifier in the first transport block or the HARQ information. In some embodiments, the implicit identifier of the terminal device is acquired by encrypting the identifier of the terminal device. The network device, subsequent to receiving the implicit identifier, determines the identifier of the terminal device by decrypting the implicit identifier. In some embodiments, after a connection is established between the terminal device and the network device, the terminal device and the network device determine the encryption method of the identifier of the terminal device and the corresponding decryption method.

In some embodiments, the implicit indication manner of the identifier of the terminal device is preconfigured or configured by the network device.

By implicitly indicating the identifier of the terminal device, the difficulty of determining the identification information of the terminal device by devices other than the network device is increased. That is, even if other devices are capable of monitoring the first transport block or the HARQ information, they are incapable of determining identifier of the terminal device visually, thereby avoiding the communication between the terminal device and the network device from being monitored and improving the safety of wireless communication.

The terminal device transmits the first transport block and the HARQ information corresponding to the first transport block to the network device. In some embodiments, the identifier of the terminal device is indicated in an explicit indication manner or an implicit indication manner. The identifier of the terminal device is carried in the first transport block or the HARQ information corresponding to the first transport block, and the network device acquires the identifier of the terminal device by decoding the first transport block or the HARQ information corresponding to the first transport block.

Because the first wireless resource autonomously selected by the terminal device may collide with the wireless resource used by another terminal device in the serving cell of the network device, the first transport block and the HARQ information corresponding to the first transport block may be successfully decoded by the network device or may not be correctly decoded by the network device.

In some embodiments, there may be the following situations in the transmission process.

In a first situation, the HARQ information and the first transport block are both correctly decoded by the network device.

In a second situation, the HARQ information is correctly decoded by the network device, but the first transport block is not correctly decoded by the network device.

In a third situation, the HARQ information is not correctly decoded by the network device, and the first transport block is correctly or not correctly decoded by the network device.

In some embodiments, in the case of the second or third situation, the terminal device needs to retransmit the first transport block.

In some embodiments, the HARQ information being correctly decoded by the network device includes the following two situations: the network device does not receive the HARQ information, and the network device is incapable of correctly decoding the HARQ information. For example, a collision of the first wireless resource is present, and the network device is incapable of successfully receiving the HARQ information. For another example, the network device determines that the decoded HARQ information does not satisfy a verification condition, which means that the network device is incapable of successfully decoding the HARQ information.

In some embodiments, the first transport block not being correctly decoded includes the following two situations: the network device does not receive the first transport block, and the network device is incapable of correctly decoding the first transport block.

The network device needs to transmits feedback information to the terminal device, wherein the feedback information feeds back whether the network device has correctly decoded a certain transport block and the HARQ information.

In some embodiments, the terminal device receives the feedback information from the network device over a feedback channel (FCH). A corresponding relationship is present between the FCH and the first wireless resource autonomously selected by the terminal device. That is, the terminal device uniquely determines the FCH based on the first wireless resource. The terminal device monitors on the FCH the feedback information corresponding to the HARQ process ID of the terminal device transmitted by the network device.

The wireless communication process between the terminal device and the network device is described hereinafter by way of some examples.

In some embodiments, the method for wireless communication further includes: starting a timer by the terminal device; and stopping, by the terminal device, the timer in the case where the terminal device receives HARQ acknowledgement (HARQ-ACK) feedback information from the network device during running of the timer; or in the case where the terminal device receives HARQ negative acknowledgement (HARQ-NACK) feedback information from the network device during running of the timer, stopping the timer, reselecting a second wireless resource to retransmit the first transport block, and restarting the timer by the terminal device.

In some embodiments, the timer is used to control the transmission duration of an initial transmission process or retransmission process of a transport block. In some embodiments, the timer is referred to as a timeout timer.

For any transport block, the terminal device starts the timer at the moment of transmitting the transport block. In a case where the running duration of the timer is less than a duration threshold, the HARQ transmission continues; and in a case where the running duration of the timer is equal to the duration threshold, the transmission of the transport block times out. In some embodiments, the duration is preconfigured. It should be noted that the duration threshold value is specified in a protocol, which is not limited in the present disclosure.

In some embodiments, in the case where the terminal device initially transmits the first transport block and the HARQ information corresponding to the first transport block to the network device, the terminal device starts the timer and records an initial transmission duration of the transport block using the timer. In some embodiments, in a case where the timer times out, the terminal device needs to retransmit the first transport block and reset the timer.

The network device monitors the channel and tries to receive the first transport block and the HARQ information corresponding to the first transport block. In some embodiments, the network device explicitly feeds back the reception result of the first transport block and the HARQ information corresponding to the first transport block to the terminal device.

In the case where the network device is capable of correctly decoding the first transport block and the HARQ information corresponding to the first transport block, the network device transmits the HARQ-ACK feedback information of the network device to the terminal device. In some embodiments, the HARQ-ACK feedback information is represented by a character of 1 bit. For example, the HARQ-ACK feedback information is represented by "1".

In some embodiments, the terminal device receives the HARQ-ACK feedback information and stops the timer. In some embodiments, the terminal device resets or cancels the timer.

In the case the network device is incapable of correctly decoding the first transport block, the network device transmits the HARQ-NACK feedback information of the network device to the terminal device. The terminal device stops the timer based on the HARQ-NACK feedback information and retransmits the first transport block. In some embodiments, the HARQ-NACK feedback information is represented by a character of 1 bit. For example, the HARQ-ACK feedback information is represented by "0".

In some embodiments, subsequent to receiving the HARQ-NACK feedback information, the terminal device needs to prepare the HARQ retransmission. In some embodiments, the terminal device autonomously selects a second wireless resource and retransmits the first resource block over the second wireless resource. For example, the terminal device autonomously selects the second wireless resource from the wireless resource pool. The second wireless resource is used to retransmit the first transport block.

In some embodiments, the HARQ information transmitted over the second wireless resource is different from the HARQ information transmitted over the first wireless resource. In some embodiments, the terminal device autonomously selects the second wireless resource from the wireless resource pool. The method of autonomously selecting the second wireless resource by the terminal device is similar to the method of autonomously selecting the first wireless resource. For the specific contents of this procedure, reference is made to the above embodiments, which is not described herein any further in the present disclosure.

FIG. 3 illustrates a schematic diagram of explicit feedback according to some embodiments of the present disclosure.

In 310, the terminal device transmits the first transport block and the HARQ information corresponding to the first transport block over the first wireless resource. In some embodiments, this process is an HARQ initial transmission or an HARQ retransmission. In 320, the network device correctly decodes the first transport block and the HARQ information corresponding to the first transport block. In 330, the network device transmits an HARQ-ACK to the terminal device and explicitly indicates that the first transport block is successfully decoded.

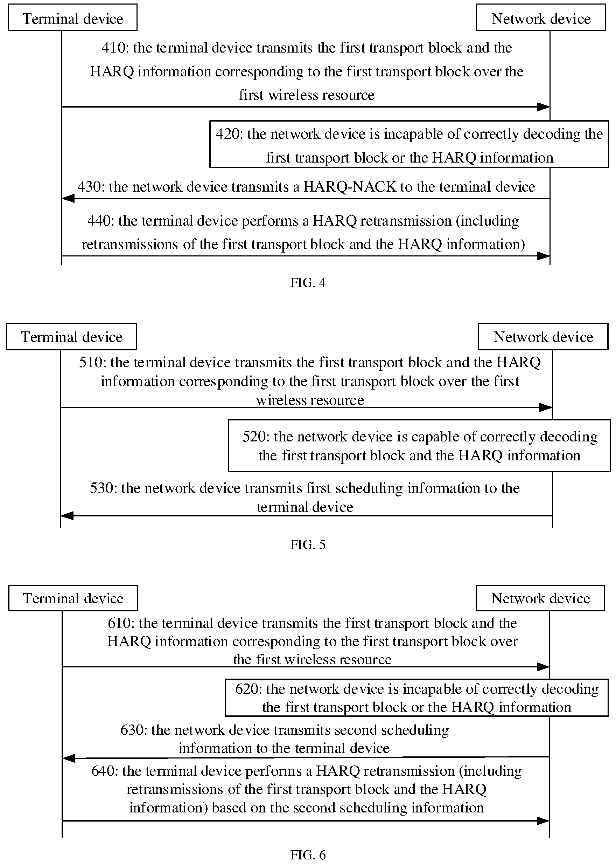

FIG. 4 illustrates a schematic diagram of explicit feedback according to some embodiments of the present disclosure.

In 410, the terminal device transmits the first transport block and the HARQ information corresponding to the first transport block over the first wireless resource. In some embodiments, this process is an HARQ initial transmission or an HARQ retransmission. In 420, the network device is incapable of correctly decoding the first transport block or the HARQ information. In 430, the network device transmits an HARQ-NACK to the terminal device and explicitly indicates that the transmission of the first transport block fails. In 440, the terminal device performs an HARQ retransmission (including retransmissions of the first transport block and the HARQ information).

By explicitly feeding back the transmission result of the first transport block, the terminal device is capable of definitely determining, based on the feedback information, whether the network device has successfully decoded the first transport block and the HARQ information corresponding to the first transport block.

In some embodiments, the method for wireless communication further includes: starting a timer by the terminal device; and stopping the timer by the terminal device in the case where the terminal device receives first scheduling information from the network device during running of the timer, wherein the first scheduling information is used to schedule the terminal device to transmit a new transport block; or in the case where the terminal device receives the second scheduling information from the network device during running of the timer, stopping the timer, retransmitting the first transport block over a wireless resource indicated by second scheduling information, and restarting the timer by the terminal device, wherein the second scheduling information is used to schedule the terminal device to retransmit the first transport block.

In some embodiments, the network device implicitly indicates the decoding result of the first transport block and the HARQ information corresponding to the first transport block to the terminal device. In some embodiments, the network device transmits scheduling information to the terminal device, and implicitly feeds back the decoding result of the first transport block and the HARQ information corresponding to the first transport block over the wireless resource indicated by the scheduling information.

In the case where the network device is capable of correctly decoding the first transport block and the HARQ information corresponding to the first transport block, the network device transmits the first scheduling information to the terminal device. In some embodiments, the first scheduling information is used to schedule the terminal device to transmit a new transport block.

In some embodiments, subsequent to receiving the first scheduling information, the terminal device determines, based on the first scheduling information, that the first transport block and the HARQ information corresponding to the first transport block are successfully decoded, and the terminal device stops the timer.

In some embodiments, the first scheduling information indicates a wireless resource (e.g., a time-frequency resource). In some embodiments, the first scheduling information includes an NDI and a new wireless resource. In the case where a new transport block needs to be transmitted, the terminal device transmits the new transport block to the network device over the new wireless resource indicated by the first scheduling information.

In the case where the network device is incapable of correctly decoding the first transport block, the network device transmits the second scheduling information to the terminal device. In some embodiments, the second scheduling information is used to schedule retransmission of the first transport block.

In some embodiments, the second scheduling information indicates a wireless resource for retransmission of the first transport block. In some embodiments, the second scheduling information includes an NDI and a wireless resource for retransmission of the first transport block.

In some embodiments, the first scheduling information and the second scheduling information include different NAIs, and the terminal device retransmits the first transport block or transmits a new transport block based on the NDI included in the scheduling information.

The terminal device receives the second scheduling information and determines, based on the second scheduling information, the first transport block is the decoded unsuccessfully. The terminal device turns off the timer and needs to retransmit the first transport block.

FIG. 5 illustrates a schematic diagram of implicit feedback according to some embodiments of the present disclosure.

In 510, the terminal device transmits the first transport block and the HARQ information corresponding to the first transport block over the first wireless resource. In some embodiments, this process is an HARQ initial transmission or an HARQ retransmission. In 520, the network device is capable of correctly decoding the first transport block and the HARQ information. In 530, the network device transmits first scheduling information to the terminal device and implicitly indicates that the first transport block and the HARQ information are successfully decoded. In some embodiments, the terminal device transmits a new transport block based on the scheduling of the first scheduling information.

FIG. 6 illustrates a schematic diagram of implicit feedback according to some other embodiments of the present disclosure.

In 610, the terminal device transmits the first transport block and the HARQ information corresponding to the first transport block over the first wireless resource. In some embodiments, this process is an HARQ initial transmission or an HARQ retransmission. In 620, the network device is incapable of correctly decoding the first transport block or the HARQ information. In 630, the network device transmits second scheduling information to the terminal device and implicitly indicates that the transmission of the first transport block fails. In 640, the terminal device performs an HARQ retransmission (including retransmissions of the first transport block and the HARQ information) based on the second scheduling information.

The network device implicitly feeds back the transmission result of the transport block and the HARQ information to the terminal device over the scheduling information, and indicates a new wireless resource over the scheduling information, thereby reducing the transmission collisions and improving the success rate of data transmission of the terminal device.

In some of the above embodiments, the terminal device determines, based on the feedback information from the network device, whether it is necessary to retransmit the first transport block, and in the other embodiments, the terminal device autonomously determines to retransmit the first transport block to reduce the time consumed for transmission of the first transport block.

In some embodiments, the method for wireless communication further includes: starting a timer by the terminal device; and in the case where the timer times out, reselecting a second wireless resource to retransmit the first transport block and restarting the timer by the terminal device.

The timer timing out refers to that the timing of the timer exceeds a duration threshold. The duration threshold is determined based on actual needs. The timer timing out represents that the HARQ process corresponding to the first transport block lasts for a long time, that is, the transmission of the first transport block may fail.

In some embodiments, in the case where the timer times out, the terminal device reselects a second wireless resource to retransmit the first transport block. In some embodiments, the terminal device autonomously selects the second wireless resource. For the specific contents of this procedure, reference is made to the above embodiments, which is not described herein any further in the present disclosure.

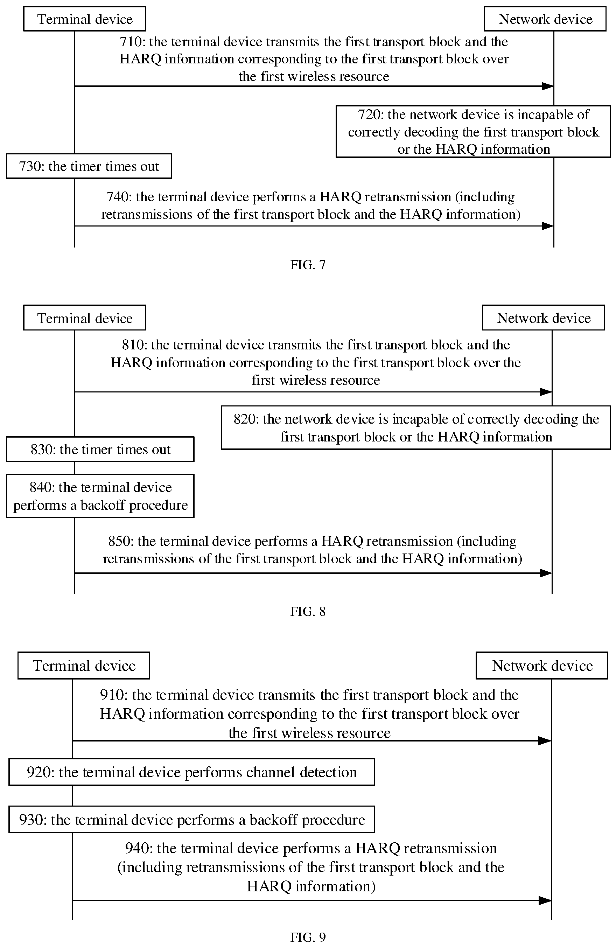

FIG. 7 illustrates a schematic diagram of timeout-based retransmission according to some embodiments of the present disclosure.

In 710, the terminal device transmits the first transport block and the HARQ information corresponding to the first transport block over the first wireless resource. In some embodiments, this process is an HARQ initial transmission or an HARQ retransmission. In 720, the network device is incapable of correctly decoding the first transport block or the HARQ information. In 730, the timer in the terminal device times out. In 740, the terminal device performs an HARQ retransmission (including retransmissions of the first transport block and the HARQ information).

In this method, in the case where the network device does not receive the first transport block, the terminal device is capable of retransmitting the transport block after the timer times out, thereby ensuring a smooth retransmission process of the transport block.

In some embodiments, the method for wireless communication further includes: starting a timer by the terminal device; and in the case where the timer times out, performing a backoff procedure to determine an occasion for retransmitting the first transport block, retransmitting the first transport block over a reselected second wireless resource at the determined occasion, and restarting the timer by the terminal device.

In some embodiments, performing the backoff procedure by the terminal device includes: determining the occasion for retransmitting the first transport block by the terminal device within a backoff duration from the start moment when the timer times out, and retransmitting, by the terminal device, the first transport block over the second wireless resource based on the determined occasion. In some embodiments, the terminal device restarts the timer and records the time consumed for retransmission of the first transport block.

In some embodiments, the backoff duration is preconfigured or configured by the network device.

In some embodiments, determining the occasion for retransmitting the first transport block by the terminal device within the backoff duration from the start moment when the timer times out includes: selecting, based on a resource monitoring result, an idle occasion from the backoff duration from the start moment when the timer times out as the occasion for retransmitting the first transport block, or reselecting, using a machine learning algorithm, the occasion for retransmitting the first transport block from the backoff duration from the start moment when the timer times out.

For example, the backoff duration is 5s and the timer times out at 12:00:00. In this case, the terminal device determines 12:00:03 from the duration of 12:00:00 to 12:00:05 as the occasion for retransmitting the first transport block, and the terminal device retransmits the first transport block over the second wireless resource at 12:00:03. In some embodiments, the terminal device selects the second wireless resource from the wireless resource pool based on the determined occasion. For example, the terminal device selects a wireless resource that is unoccupied at the determined occasion from the wireless resource pool as the second wireless resource.

It should be noted that the method of determining the occasion for retransmitting the first transport block is set based on actual needs, which is not limited in the present disclosure.

FIG. 8 illustrates a schematic diagram of backoff-based retransmission according to some embodiments of the present disclosure.

In 810, the terminal device transmits the first transport block and the HARQ information corresponding to the first transport block over the first wireless resource. In some embodiments, this process is an HARQ initial transmission or an HARQ retransmission. In 820, the network device is incapable of correctly decoding at least one of the first transport block or the HARQ information. In 830, the timer in the terminal device times out. In 840, the terminal device performs a backoff procedure, and determines an occasion for retransmitting the first transport block. In 850, the terminal device performs an HARQ retransmission (including retransmissions of the first transport block and the HARQ information). The terminal device retransmits the first transport block over the reselected second wireless resource at the determined occasion.

By performing the backoff procedure, the terminal device is capable of determining the occasion for retransmitting the first transport block from the backoff duration, thereby avoiding the collision of the second wireless resource and improving the success rate of retransmission of the first transport block.

In some embodiments, the method for wireless communication further includes: starting a timer by the terminal device; detecting, by the terminal device, a wireless channel associated with the first wireless resource during running of the timer; and in the case where a channel collision is detected, stopping the timer, performing a backoff procedure to determine an occasion for retransmitting the first transport block, retransmitting the first transport block over a reselected second wireless resource at the determined occasion, and restarting the timer by the terminal device.

In some embodiments, subsequent to transmitting the first transport block and the HARQ information corresponding to the first transport block to the network device over the first wireless resource, the terminal device detects the wireless channel associated with the first wireless resource, and determines whether it is necessary to retransmit the first transport block based on the channel detection result.

A channel collision refers to that a collision is present in the wireless channel associated with the first wireless resource, that is, the wireless resources (e.g., time-frequency resources) used by the terminal device and another terminal device in the same wireless channel overlap. The channel collision may result in that the network device is incapable of receiving the first transport block or the HARQ information successfully. In some embodiments, the terminal device detects the wireless channel associated with the first wireless resource continuously prior to receiving the feedback information from the network device or prior to the timer timing out.

In some embodiments, in the case where the terminal device does not detect a channel collision, the terminal device continues detecting the wireless channel.

In some embodiments, in the case where the terminal device detects a channel collision, the first transport block or the HARQ information may be unsuccessfully transmitted or incorrectly decoded, and the terminal device stops the timer and retransmits the first transport block.

In some embodiments, the terminal device performs a backoff procedure, determines an occasion for retransmitting the first transport block, and retransmits the first transport block over the reselected second wireless resource at the determined occasion. In some embodiments, the terminal device restarts the timer and records the time duration for retransmission of the first transport block.

In some embodiments, the terminal device does not perform the backoff procedure. That is, subsequent to detecting a channel collision, the terminal device autonomously determines a second wireless resource and retransmits the first transport block over the second wireless resource. For example, in the case where the terminal device detects a channel collision, the terminal device determines the second wireless resource immediately. Subsequent to determining the second wireless resource, the terminal device retransmits the first transport block over the second wireless resource. By using this method, the terminal device is capable of starting the retransmission more quickly.

In some embodiments, the terminal device determines the occasion for retransmitting the first transport block from the backoff duration starting from the moment when the terminal device detects the channel collision. For example, the backoff duration is 3s, and the terminal device detects the channel collision at 11:00:15, and in this case, the terminal device determines 11:00:18 from the duration of 11:00:15 to 11:00:18 as the occasion for retransmitting the first transport block.

For the details of the method of determining the occasion for retransmitting the first transport block and the method of selecting the second wireless resource, reference is made to the above embodiments, which is not described herein any further in the present disclosure.

FIG. 9 illustrates a schematic diagram of monitoring-based retransmission according to some embodiments of the present disclosure.

In 910, the terminal device transmits the first transport block and the HARQ information corresponding to the first transport block over the first wireless resource. In some embodiments, this process is an HARQ transmission initial or an HARQ retransmission. In 920, the terminal device performs channel detection and determines a collision is present in the wireless channel associated with the first wireless resource. In 930, the terminal device performs a backoff procedure and determines an occasion for retransmitting the first transport block. In 940, the terminal device performs an HARQ retransmission (including retransmissions of the first transport block and the HARQ information). The terminal device retransmits the first transport block over the reselected second wireless resource at the determined occasion.

By the above method, the terminal device is capable to know timely whether a collision is present in the wireless channel associated with the wireless resource, and retransmit the first transport block timely in the case where a collision occurs in the related wireless channel, without waiting to retransmit the first transport block until the timer times out, such that the duration from the moment of transmitting the first transport block to the moment of retransmitting the first transport block is shorted and the transmission efficiency of the first transport block is improved.

In some embodiments, a physical layer of the terminal device processes control information including the HARQ information in a manner different from that for the physical layer of the terminal device to process a PDU for generating the first transport block.

The physical layer of the terminal device processes an upper layer packet and transmits the processed packet to the network device over the first wireless resource.

The PDU for generating the first transport block refers to a data unit transmitted from the MAC layer to the physical layer. In some embodiments, the PDU for generating the first transport block includes user data, and the physical layer processes the PDU to acquire the first transport block.

The control information including the HARQ information and the PDU for generating the first transport block are processed in different manners, such that the transmission success probability of at least one of the first transport block or the HARQ information is increased while controlling the wireless resources consumed in the transmission process.

In some embodiments, the physical layer processes the PDU for generating the first transport block and the control information including the HARQ information in different manners, such that the transmission success rate of the HARQ information is increased.

In some embodiments, the coding rate of the physical layer for the control information is less than the coding rate of the physical layer for the PDU; and/or the modulation order of the physical layer for the control information is less than the modulation order of the physical layer for the PDU.

In some embodiments, the coding rate refers to the proportion of useful data (non-redundant data) in data. Assuming that the coding rate is k/n, then each k bits of useful information correspond to n bits of data, wherein the remaining (n-k) bits of data are redundant data.

In some embodiments, the coding rate is negatively correlated with the decoding success rate. That is, the higher the coding rate of data, the lower the decoding success rate of data; and the lower the coding rate of data, the higher the decoding success rate of data. The physical layer processes the PDU at a low coding rate (less than the coding rate for the PDU), such that the decoding success rate of the HARQ information is improved.

In some embodiments, the modulation order is used to calculate the number of bits represented by each data unit (symbol). In some embodiments, the modulation order of the physical layer for the control information includes at least one of binary phase shift keying (BPSK) or quadrature phase shift keying (QPSK).

In some embodiments, the modulation order is negatively correlated with the decoding success rate. That is, the higher the modulation order of data, the lower the decoding success rate of data; and the lower the modulation order of data, the higher the decoding success rate of data.

In an example, the coding rate of the physical layer for the control information is less than the coding rate of the physical layer for the PDU.

In another example, the modulation order of the physical layer for the control information is less than the modulation order of the physical layer for the PDU.

In another example, the coding rate of the physical layer for the control information is less than the coding rate of the physical layer for the PDU, and the modulation order of the physical layer for the control information is less than the modulation order of the physical layer for the PDU.

It should be noted that the specific parameters of the coding rate and the modulation order used by the physical layer are set based on actual needs, which are not limited in the present disclosure.

In the above method, a low coding rate and/or modulation order is used, such that the difficulty of successfully decoding the HARQ information by the network device is reduced and the decoding success rate of the HARQ information (or control information) is increased. In the case where the HARQ information is decoded unsuccessfully, the terminal device needs to retransmit the first transport block no matter whether the first transport block is decoded successfully or not. Therefore, by increasing the decoding success rate of the HARQ information, retransmissions of the first transport block due to unsuccessful decoding of the HARQ information can be reduced.

In some embodiments, the control information is physical layer uplink control information of the terminal device.

In some embodiments, the control information is generated by the MAC layer of the terminal device. In some embodiments, the control information includes at least one of the HARQ information, the identifier of the terminal device, or the modulation order and coding rate.

In the case where the terminal device processes the control information including the HARQ information in a manner different from that for the terminal device to process a PDU for generating the first transport block, the control information includes the modulation order and coding rate for generating the HARQ information and the modulation order and coding rate for generating the first transport block.

The distribution positions of the HARQ information, the identifier of the terminal device, and the modulation order and coding rate in the control information are determined based on actual needs, which is not limited in the present disclosure.

In some embodiments, the PDU for generating the first transport block includes a to-be-transmitted data packet and buffer status information (BSI) of the terminal device.

In some embodiments, the to-be-transmitted data packet includes user data, and the BSI of the terminal device is information related to the first transport block which is stored in the terminal device.

In some embodiments, the BSI includes at least one of size information of a buffered data packet, a relationship between a data packet and a logical channel, or a remaining delay budget of a packet. The size information of the buffered data packet indicates the data amount of the to-be-transmitted data packet. The corresponding relationship between the data packet and the logical channel indicates the logical channel corresponding to the to-be-transmitted data packet. The remaining delay budget of the packet refers to the remaining transmission time of the to-be-transmitted data packet (e.g., a transport block) before the transmission duration reaches the delay budget.

For example, the delay budget for a transport block is 10s, and the transmission duration of this transport block is 7s, and then the remaining delay budget of the packet for this transport block is 3s.

In some embodiments, the BSI is generated by the radio link control (RLC) layer of the terminal device. The RLC layer receives a service data unit (SDU) input by an upper layer and generates the BSI corresponding to the to-be-transmitted data packet. The RLC layer acquires the PDU of the RLC layer based on the SDU input by the upper layer and the BSI.

The MAC layer takes the PDU of the RLC layer as the SDU of the MAC layer and generates control information. The MAC layer acquires the PDU of MAC layer based on the control information and the SDU of the MAC layer. The physical layer receives the PDU of MAC layer, and acquires the first transport block and the HARQ information corresponding to the first transport block by modulating and coding the PDU. The physical layer of the terminal device transmits the first transport block and the HARQ information corresponding to the first transport block to the network device over the first wireless resource.

In the case where the network device implicitly feeds back the transmission result of the first transport block and the HARQ information to the terminal device described in the above embodiment, the network device may generate the scheduling information based on the remaining delay budget.

In some embodiments, the first transport block includes a remaining delay budget. In the case where the network device successfully decodes the first transport block but fails to decode the HARQ information corresponding to the first transport block, the terminal device needs to retransmit the first transport block. The network device generates the second scheduling information based on the remaining delay budget and transmits the second scheduling information to the terminal device.

The terminal device receives the second scheduling information, and retransmits the first transport block and the HARQ information corresponding to the first transport block based on the new wireless resource indicated by the second scheduling information.

In some embodiments, the HARQ information corresponding to the first transport block in the retransmission process of the first transport block is different from the HARQ information corresponding to the first transport block in the initial transmission process of the first transport block.

In some embodiments, the first transport block includes a remaining delay budget. In the case where the network device successfully decodes the first transport block and the HARQ information corresponding to the first transport block, the network device generates the first scheduling information based on the remaining delay budget and transmits the first scheduling information to the terminal device.

The terminal device receives the first scheduling information, and transmits a new transport block based on the new wireless resource indicated by the first scheduling information.

In some embodiments, the physical layer of the terminal device performs signal modulation by non-orthogonal multiple access (NOMA).

The NOMA modulation scheme allows the network device to receive signals transmitted by one terminal device or respectively transmitted by a plurality of terminal devices over partially or completely overlapped wireless resources and to correctly decode part or all of the signals.

In some embodiments, performing, by the physical layer of the terminal device, signal modulation by NOMA includes: modulating the control information including the HARQ information and the PDU for generating the first transport block by NOMA.

In the case where the HARQ information includes the HARQ process ID, the physical layer of the terminal device performs signal modulation by NOMA, such that the terminal device is capable of establishing a plurality of HARQ processes to transmit a plurality of PDUs in parallel.

In the case where the HARQ information does not include the HARQ process ID or the HARQ process ID is set as a fixed value (e.g., 0), the terminal device is only capable of transmitting transport blocks in series. For example, the terminal device starts the HARQ process for a next transport block subsequent to completing the HARQ process for the first transport block.

In some embodiments, performing, by the physical layer of the terminal device, signal modulation by NOMA is preconfigured or configured by the network device.

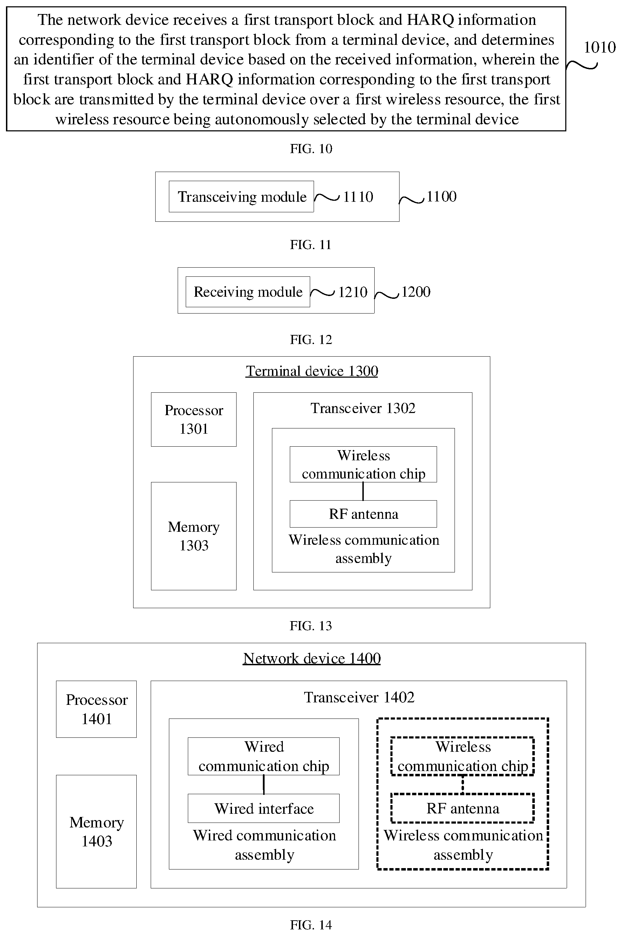

FIG. 10 illustrates a flowchart of a method for wireless communication according to some other embodiments of the present disclosure. This method is applicable to the network architecture illustrated in FIG. 1. For example, the processes may be performed by a network device. The method includes the following process (1010).

In process 1010, the network device receives a first transport block and HARQ information corresponding to the first transport block from a terminal device, and determines an identifier of the terminal device based on the received information, wherein the first transport block and the HARQ information corresponding to the first transport block are transmitted by the terminal device over a first wireless resource, the first wireless resource being autonomously selected by the terminal device.

The network device determines, based on the identifier of the terminal device, that the first transport block and the HARQ information corresponding to the first transport block are transmitted by the terminal device, such that the network device is capable of transmitting feedback information to the terminal device based on the decoding result of the first transport block and the HARQ information.

In the scenario where the terminal device autonomously selects a wireless resource for data transmission, the terminal device indicates, when transmitting the transport block and the HARQ information corresponding to the transport block to the network device over the autonomously selected wireless resource, the identifier of the terminal device to the network device, such that the network device knows, subsequent to receiving the transport block, which terminal device the transport block is transmitted from. In this way, it is ensured that the HARQ feedback can be performed smoothly subsequently and the reliability of data transmission in the case of a potential collision is improved.

In some embodiments, the HARQ information includes the identifier of the terminal device, or control information including the HARQ information includes the identifier of the terminal device.

In some embodiments, the identifier of the terminal device is indicated in an implicit indication manner. In some embodiments, indicating the identifier of the terminal device in the implicit indication manner includes that the terminal device convolutes the identifier of the terminal device in the control information or in the first transport block.

Subsequent to receiving the control information or the first transport block convoluted with the identifier of the terminal device, the network device acquires the identifier of the terminal device by performing a fast blind decoding based on the stored context of the terminal device in the serving cell. By indicating the identifier of the terminal device in the implicit indication manner, the safety of the wireless communication process can be improved.

In some embodiments, the method for wireless communication further includes: transmitting, by the network device, HARQ-ACK feedback information to the terminal device in the case where the HARQ information and the first transport block are both correctly decoded; or transmitting, by the network device, HARQ-NACK feedback information to the terminal device in the case where the HARQ information is correctly decoded but the first transport block is not correctly decoded.

In some embodiments, in the case where the terminal device and the network device agree not to retransmit the transport block, the network device explicitly feeds back the transmission result to the terminal device.

The network device explicitly feeds back the transmission result of the first transport block and the HARQ information to the terminal device, such that the network device is capable of explicitly indicating the decoding result of the first transport block and the HARQ information to the terminal device.

In some embodiments, the method for wireless communication further includes: transmitting, by the network device, first scheduling information to the terminal device in the case where the HARQ information and the first transport block are both correctly decoded, wherein the first scheduling information is configured to schedule the terminal device to transmit a new transport block; or transmitting, by the network device, second scheduling information to the terminal device in the case where the HARQ information is correctly decoded but the first transport block is not correctly decoded, wherein the second scheduling information is used to schedule the terminal device to retransmit the first transport block.

In some embodiments, the terminal device and the network device agree to retransmit the transport block in the case of transmission failure. In this case, the network device implicitly feeds back the transmission result to the terminal device. In some embodiments, the scheduling information includes a new wireless resource, and the terminal device retransmits the first transport block or transmits a new transport block over the new wireless resource.

By indicating the new wireless resource over the scheduling information, the probability of collision occurred in the transmission process can be reduced and the transmission success rate of the transport block can be increased.

In some embodiments, the method for wireless communication further includes: receiving, by the network device, the first transport block retransmitted by the terminal device over a reselected second wireless resource; wherein the first transport block is retransmitted in the case where a timer of the terminal device times out or the terminal device detects a channel collision in a wireless channel associated with the first wireless resource subsequent to transmitting the first information.

In some embodiments, the first transport block and the HARQ information are transmitted to the network device over the same channel.

In some embodiments, the first transport block and the HARQ information are transmitted to the network device over different channels.

In some embodiments, the HARQ information further includes at least one of: an HARQ process identifier or an NDI.

In some embodiments, a PDU for generating the first transport block includes: a to-be-transmitted data packet and BSI of the terminal device

In some embodiments, the method for wireless communication further includes: transmitting, by the network device, configuration information of a wireless resource pool to the terminal device, wherein wireless resources in the wireless resource pool are shared by a plurality of terminal devices in a cell corresponding to the network device.

In some embodiments, the configuration information of the wireless resource pool is used to configure the wireless resource pool. The terminal device determines the wireless resources (e.g., time-frequency resources) included in the wireless resource pool based on the configuration information of the wireless resource pool. In some embodiments, the network device transmits the configuration information of the wireless resource pool to the plurality of terminal devices in the same serving cell.

For example, after a communication connection is established between the terminal device and the network device, the network device transmits the configuration information of the wireless resource pool to the terminal device. For another example, the network device broadcasts the configuration information of the wireless resource pool to the terminal device.

It should be noted that for contents of the method embodiments at the network device side which are not described in detail, reference may be made to the method embodiments at the terminal device side, which are not described herein any further in the present disclosure.

Apparatus embodiments of the present disclosure are described hereinafter, which are applicable for performing the method embodiments of the present disclosure. For details not disclosed in the apparatus embodiments of the present disclosure, reference may be made to the method embodiments of the present disclosure.

FIG. 11 illustrates a block diagram of an apparatus for wireless communication according to some embodiments of the present disclosure. The apparatus has the function of performing the method embodiments performed by the terminal device, and the function may be performed by hardware or by corresponding software run by hardware. The apparatus may be the terminal device described above or installed in the terminal device. As illustrated in FIG. 11, the apparatus 11 includes a transceiving module 1110.

The transceiving module 1110 is configured to transmit a first transport block and HARQ information corresponding to the first transport block to a network device over a first wireless resource, and indicate an identifier of a terminal device to the network device, wherein the first wireless resource is autonomously selected by the apparatus.

In some embodiments, the HARQ information includes the identifier of the terminal device; or control information including the HARQ information includes the identifier of the terminal device.

In some embodiments, the identifier of the terminal device is indicated in an implicit indication manner.

In some embodiments, the transceiving module 1110 is further configured to: start a timer; and stop the timer in the case of receiving HARQ-ACK feedback information from the network device during running of the timer; or in the case of receiving HARQ-NACK feedback information from the network device during running of the timer, stop the timer, reselect a second wireless resource to retransmit the first transport block, and restart the timer.

In some embodiments, the transceiving module 1110 is further configured to: start a timer; and stop the timer in the case of receiving first scheduling information from the network device during running of the timer, wherein the first scheduling information is used to schedule the terminal device to transmit a new transport block; or in the case of receiving the second scheduling information from the network device during running of the timer, stop the timer, retransmit the first transport block over a wireless resource indicated by second scheduling information, and restart the timer, wherein the second scheduling information is used to schedule the terminal device to retransmit a first transport block.

In some embodiments, the transceiving module 1110 is further configured to: start a timer; reselect a second wireless resource to retransmit the first transport block in the case where the timer times out and restart the timer.

In some embodiments, the transceiving module 1110 is further configured to: start a timer; and in the case where the timer times out, perform a backoff procedure to determine an occasion for retransmitting the first transport block, retransmit the first transport block over a reselected second wireless resource at the determined occasion, and restart the timer.

In some embodiments, the transceiving module 1110 is further configured to: start a timer; detect a wireless channel associated with the first wireless resource during running of the timer; and in the case where a channel collision is detected, stop the timer, perform a backoff procedure to determine an occasion for retransmitting the first transport block, retransmit the first transport block over a reselected second wireless resource at the determined occasion, and restart the timer.

In some embodiments, the first transport block and the HARQ information are transmitted to the network device over the same channel.

In some embodiments, the first transport block and the HARQ information are transmitted to the network device over different channels.

In some embodiments, the HARQ information further includes at least one of: an HARQ process identifier or an NDI.

In some embodiments, a physical layer of the terminal device processes control information including the HARQ information in a manner different from that for the physical layer of the terminal device to process a PDU for generating the first transport block.

In some embodiments, a coding rate of the physical layer for the control information is less than a coding rate of the physical layer for the PDU; and/or a modulation order of the physical layer for the control information is less than a modulation order of the physical layer for the PDU.

In some embodiments, the control information is physical layer uplink control information of the terminal device.

In some embodiments, the PDU for generating the first transport block includes: a to-be-transmitted data packet and BSI of the terminal device.

In some embodiments, at least one of the first wireless resource or a second wireless resource is autonomously selected by the terminal device from a wireless resource pool, wherein wireless resources in the wireless resource pool are shared by a plurality of terminal devices in a cell where the terminal device is located, and the second wireless resource is used to retransmit the first transport block.

In some embodiments, a physical layer of the terminal device performs signal modulation by NOMA.

FIG. 12 illustrates a block diagram of an apparatus for wireless communication according to some embodiments of the present disclosure. The apparatus has the function of performing the method embodiments performed by the network device, and the function may be performed by hardware or by corresponding software run by hardware. The apparatus may be the network device described above or installed in the network device. As illustrated in FIG. 12, the apparatus 1200 includes a receiving module 1210.

The receiving module 1210 is configured to receive a first transport block and HARQ information corresponding to the first transport block from a terminal device, and determine an identifier of the terminal device based on the received information, wherein the first transport block and the HARQ information corresponding to the first transport block are transmitted by the terminal device over a first wireless resource, the first wireless resource being autonomously selected by the terminal device.

In some embodiments, the HARQ information includes the identifier of the terminal device; or control information including the HARQ information includes the identifier of the terminal device.

In some embodiments, the identifier of the terminal device is indicated in an implicit indication manner.

In some embodiments, the apparatus 1200 further includes: a transmitting module, configured to transmit HARQ-ACK feedback information to the terminal device in the case where the HARQ information and the first transport block are both correctly decoded; or transmit HARQ-NACK feedback information to the terminal device in the case where the HARQ information is correctly decoded but the first transport block is not correctly decoded.

In some embodiments, the apparatus 1200 further includes: a transmitting module, configured to transmit first scheduling information to the terminal device in the case where the HARQ information and the first transport block are both correctly decoded, wherein the first scheduling information is configured to schedule the terminal device to transmit a new transport block; or transmit second scheduling information to the terminal device in the case where the HARQ information is correctly decoded but the first transport block is not correctly decoded, wherein the second scheduling information is used to schedule the terminal device to retransmit the first transport block.

In some embodiments, the receiving module 1210 is further configured to: receive the first transport block retransmitted by the terminal device over a reselected second wireless resource; wherein the first transport block is retransmitted in the case where a timer of the terminal device times out or the terminal device detects a collision in a wireless channel associated with the first wireless resource subsequent to transmitting the first information.

In some embodiments, the first transport block and the HARQ information are transmitted to the network device over the same channel.

In some embodiments, the first transport block and the HARQ information are transmitted to the network device over different channels.

In some embodiments, the HARQ information further includes at least one of: an HARQ process identifier or an NDI.

In some embodiments, a PDU for generating the first transport block includes: a to-be-transmitted data packet and BSI of the terminal device

In some embodiments, the apparatus 1200 further includes: a resource transmitting module, configured to transmit configuration information of a wireless resource pool to the terminal device, wherein wireless resources in the wireless resource pool are shared by a plurality of terminal devices in a cell corresponding to the network device.

It should be noted that in the case where the apparatus according to the above embodiments implements its functions, the division of the functional modules is only for illustrative purposes. In practice, the functions may be distributed to different functional modules based on actual needs, that is, the internal structure of the apparatus may be divided into different functional modules to complete all or part of the functions described above.

Regarding the apparatus in the above embodiments, the specific way in which each module performs operations has been described in detail in the relevant method embodiments, and is not described any further.

FIG. 13 is a schematic structural diagram of a terminal device according to some embodiments of the present disclosure. The terminal device 1300 is applicable to perform the method for wireless communication performed by the terminal device in the above embodiments. The terminal device 1300 may include a processor 1301, a transceiver 1302, and a memory 1303.

The processor 1301 includes one or more processing cores. The processor 1301 runs various functional applications and performs information processing by running one or more software programs and modules. The processor 1301 is configured to perform processes performed by the terminal device other than the receiving processes and transmitting processes in the above method embodiments.

The transceiver 1302 may include a receiver and a transmitter. For example, the receiver and the transmitter may be implemented as a same wireless communication assembly. The wireless communication assembly may include one wireless communication chip and a radio frequency (RF) antenna. The transceiver 1302 is configured to perform the receiving processes and/or transmitting processes performed by the terminal device in the above method embodiments.

The memory 1303 may be connected to the processor 1301 and the transceiver 1302.

The memory 1303 may be configured to store at least one computer program run by a processor. The processor 1301 is configured to load and run the at least one computer program to perform the processes performed by the terminal device in the above method embodiments.

In addition, the memory 1303 may be practiced by any type of volatile or non-volatile storage device or a combination thereof. The volatile or non-volatile storage device includes but is not limited to: a magnetic disk or an optical disc, an electrically erasable programmable read-only memory (EEPROM), an erasable programmable read-only memory (EPROM), a static random-access memory (SRAM), a read-only memory (ROM), a magnetic memory, a flash memory, or a programmable ROM (PROM).

In some embodiments, the transceiver 1302 is configured to transmit a first transport block and HARQ information corresponding to the first transport block to a network device over a first wireless resource, and indicate an identifier of the terminal device to the network device, wherein the first wireless resource is autonomously selected by the terminal device.

For details not described in the present embodiment, reference may be made to the above method embodiments, which are not described herein any further.

FIG. 14 is a schematic structural diagram of a network device 1400 according to some embodiments of the present disclosure. The network device 1400 is applicable to perform the processes performed by the network device in the above embodiments. The network device 1400 may include a processor 1401, a transceiver 1402, and a memory 1403.

The processor 1401 includes one or more processing cores. The processor 1401 runs various functional applications and performs information processing by running one or more software programs and modules. The processor 1401 is configured to perform processes performed by the network device other than the receiving processes and transmitting processes in the above method embodiments.

The transceiver 1402 may include a receiver and a transmitter. For example, the transceiver 1402 may include one wired communication assembly, and the wired communication assembly may include one wired communication chip and a wired interface (e.g., a fiber interface). In some embodiments, the transceiver 1402 further includes one wireless communication assembly, wherein the wireless communication assembly may include one wireless communication chip and an RF antenna. The transceiver 1402 is configured to perform the receiving processes and/or transmitting processes performed by the network device in the above method embodiments.

The memory 1403 may be connected to the processor 1401 and the transceiver 1402.

The memory 1403 may be configured to store at least one computer program run by a processor. The processor 1401 is configured to load and run the at least one computer program to perform the processes performed by the network device in the above method embodiments.

In addition, the memory 1403 may be practiced by any type of volatile or non-volatile storage device or a combination thereof. The volatile or non-volatile storage device includes but is not limited to: a magnetic disk or an optical disc, an EEPROM, an EPROM, a SRAM, a ROM, a magnetic memory, a flash memory, or a PROM.

In some embodiments, the transceiver 1402 is configured to receive a first transport block and HARQ information corresponding to the first transport block from a terminal device, and determine an identifier of the terminal device based on the received information, wherein the first transport block and the HARQ information corresponding to the first transport block are transmitted by the terminal device over a first wireless resource, the first wireless resource being autonomously selected by the terminal device.

For details not described in the present embodiment, reference may be made to the above method embodiments, which are not described herein any further.

Some embodiments of the present disclosure further provide a computer-readable storage medium. The computer-readable storage medium stores one or more computer programs, and the one or more computer programs, when loaded and run by a processor of a communication device, cause the communication device to perform the above method for wireless communication at the terminal device side or the above method for wireless communication at the network device side.

In some embodiments, the computer-readable storage medium may include a ROM, a random-access memory (RAM), a solid-state drive (SSD), an optical disk, or the like. The RAM may include a resistance random access memory (ReRAM) and a dynamic random-access memory (DRAM).

Some embodiments of the present disclosure further provide a chip. The chip includes a programmable logic circuit and/or one or more program instructions. The chip, when running on a communication device, causes the communication device to perform the above method for wireless communication at the terminal device side or the above method for wireless communication at the network device side.

Some embodiments of the present disclosure further provide a computer program product. The computer program product includes one or more computer instructions stored in a computer-readable storage medium. The one or more computer instructions, when read from the computer-readable storage medium and executed by a processor, cause the processor to perform the above method for wireless communication at the terminal device side or the above method for wireless communication at the network device side.

Some embodiments of the present disclosure further provide a communication system including a terminal device and a network device. The terminal device is configured to perform the above method for wireless communication at the terminal device side and the network device is configured to perform the above method for wireless communication at the network device side.

It is to be understood that "indication" mentioned in the embodiments of the present disclosure may be a direct indication, an indirect indication, or an indication that an association relationship is present. For example, "A indicates B" may mean that A directly indicates B, for example, B is acquired from A; or may mean that A indirectly indicates B, for example, A indicates C through which B is acquired; or may mean an association relationship is present between A and B.

In the description of the embodiments of the present disclosure, the term "corresponding" indicates a direct or indirect corresponding relationship between two items, or an association relationship between the two items, or a relationship such as indicating and being indicated, configuring and being configured, or the like.

The expression "a plurality of" herein refers to two or more. The term "and/or" herein describes an association relationship between associated objects, indicating three types of relationships. For example, the phrase "A and/or B" means (A), (B), or (A and B). The character "/" herein generally represents an "or" relationship between the associated objects.

The expression "greater than or equal to" herein means greater than or equal to or just greater than, and the expression "less than or equal to" herein means less than or equal to or just less than.

In addition, the serial numbers of the processes described herein only exemplify one possible execution sequence among the processes. In some embodiments, the processes may also be executed without following the numbered order. For example, two processes with different numbers are executed simultaneously or in an order reverse to the order illustrated in the figures, which is not limited in the embodiments of the present disclosure.

A person skilled in the art shall appreciate that in the foregoing one or more examples, the functions described in the embodiments of the present disclosure may be implemented by hardware, software, firmware, or any combination thereof. The functions, when implemented by software, may be stored in a computer-readable medium or transmitted as one or more instructions or codes on the computer-readable medium. The computer-readable medium includes a computer storage medium and a communication medium. The communication medium includes any medium that facilitates transfer of a computer program from one place to another. The storage medium may be any available medium accessible by a general-purpose computer or a special-purpose computer.

Described above are merely exemplary embodiments of the present disclosure and are not intended to limit the present disclosure. Any modifications, equivalent replacements, improvements, and the like made within the spirit and principle of the present disclosure shall fall within the protection scope of the present disclosure.

## Claims

1. A method for wireless communication, applicable to a terminal device, the method comprising:
transmitting a first transport block and hybrid automatic repeat request (HARQ) information corresponding to the first transport block to a network device over a first wireless resource, and indicating an identifier of the terminal device to the network device, wherein the first wireless resource is autonomously selected by the terminal device.

2. The method according to claim 1, wherein
the HARQ information comprises the identifier of the terminal device; or
control information comprising the HARQ information comprises the identifier of the terminal device.

3. The method according to claim 1, wherein the identifier of the terminal device is indicated in an implicit indication manner.

4. The method according to any one of claims 1 to 3, further comprising:
starting a timer; and
stopping the timer in a case where the terminal device receives HARQ acknowledgement (HARQ-ACK) feedback information from the network device during running of the timer; or
in a case where the terminal device receives HARQ negative acknowledgement (HARQ-NACK) feedback information from the network device during running of the timer, stopping the timer, reselecting a second wireless resource to retransmit the first transport block, and restarting the timer.

5. The method according to any one of claims 1 to 3, further comprising:
starting a timer; and
stopping the timer in a case where the terminal device receives first scheduling information from the network device during running of the timer, wherein the first scheduling information is used to schedule the terminal device to transmit a new transport block; or
in a case where the terminal device receives the second scheduling information from the network device during running of the timer, stopping the timer, retransmitting the first transport block over a wireless resource indicated by second scheduling information, and restarting the timer, wherein the second scheduling information is used to schedule the terminal device to retransmit the first transport block.

6. The method according to any one of claims 1 to 3, further comprising:
starting a timer; and
in a case where the timer times out, reselecting a second wireless resource to retransmit the first transport block, and restarting the timer.

7. The method according to any one of claims 1 to 3, further comprising:
starting a timer; and
in a case where the timer times out, performing a backoff procedure to determine an occasion for retransmitting the first transport block, retransmitting the first transport block over a reselected second wireless resource at the determined occasion, and restarting the timer.

8. The method according to any one of claims 1 to 3, further comprising:
starting a timer;
detecting a wireless channel associated with the first wireless resource during running of the timer; and
in a case where a channel collision is detected, stopping the timer, performing a backoff procedure to determine an occasion for retransmitting the first transport block, retransmitting the first transport block over a reselected second wireless resource at the determined occasion, and restarting the timer.

9. The method according to any one of claims 1 to 8, wherein the first transport block and the HARQ information are transmitted to the network device over a same channel.

10. The method according to any one of claims 1 to 8, wherein the first transport block and the HARQ information are transmitted to the network device over different channels.

11. The method according to any one of claims 1 to 10, wherein the HARQ information further comprises at least one of an HARQ process identifier or a new data indicator (NDI).

12. The method according to any one of claims 1 to 11, wherein a physical layer of the terminal device processes control information comprising the HARQ information in a manner different from that for the physical layer of the terminal device to process a protocol data unit (PDU) for generating the first transport block.

13. The method according to claim 12, wherein
a coding rate of the physical layer for the control information is less than a coding rate of the physical layer for the PDU; and/or
a modulation order of the physical layer for the control information is less than a modulation order of the physical layer for the PDU.

14. The method according to any one of claims 2, 12 and 13, wherein the control information is physical layer uplink control information of the terminal device.

15. The method according to any one of claims 1 to 14, wherein a protocol data unit (PDU) for generating the first transport block comprises: a to-be-transmitted data packet and buffer status information (BSI) of the terminal device.

16. The method according to any one of claims 1 to 15, wherein at least one of the first wireless resource or a second wireless resource is autonomously selected by the terminal device from a wireless resource pool, wherein wireless resources in the wireless resource pool are shared by a plurality of terminal devices in a cell where the terminal device is located, and the second wireless resource is used to retransmit the first transport block.

17. The method according to any one of claims 1 to 16, wherein a physical layer of the terminal device performs signal modulation by non-orthogonal multiple access (NOMA).

18. A method for wireless communication, applicable to a network device, the method comprising:
receiving a first transport block and hybrid automatic repeat request (HARQ) information corresponding to the first transport block from a terminal device, wherein the first transport block and the HARQ information corresponding to the first transport block are transmitted by the terminal device over a first wireless resource, the first wireless resource being autonomously selected by the terminal device; and
determining an identifier of the terminal device based on the received information.

19. The method according to claim 18, wherein
the HARQ information comprises the identifier of the terminal device; or
control information comprising the HARQ information comprises the identifier of the terminal device.

20. The method according to claim 18, wherein the identifier of the terminal device is indicated in an implicit indication manner.

21. The method according to any one of claims 18 to 20, further comprising:
transmitting HARQ acknowledgement (HARQ-ACK) feedback information to the terminal device in a case where the HARQ information and the first transport block are both correctly decoded; or
transmitting HARQ negative acknowledgement (HARQ-NACK) feedback information to the terminal device in a case where the HARQ information is correctly decoded but the first transport block is not correctly decoded.

22. The method according to any one of claims 18 to 20, further comprising:
transmitting first scheduling information to the terminal device in a case where the HARQ information and the first transport block are both correctly decoded, wherein the first scheduling information is used to schedule the terminal device to transmit a new transport block; or
transmitting second scheduling information to the terminal device in a case where the HARQ information is correctly decoded but the first transport block is not correctly decoded, wherein the second scheduling information is used to schedule the terminal device to retransmit the first transport block.

23. The method according to any one of claims 18 to 20, further comprising:
receiving the first transport block retransmitted by the terminal device over a reselected second wireless resource;
wherein the first transport block is retransmitted in a case where a timer of the terminal device times out or the terminal device detects a channel collision in a wireless channel associated with the first wireless resource subsequent to transmitting the first information.

24. The method according to any one of claims 18 to 23, wherein the first transport block and the HARQ information are transmitted to the network device over a same channel.

25. The method according to any one of claims 18 to 23, wherein the first transport block and the HARQ information are transmitted to the network device over different channels.

26. The method according to any one of claims 18 to 25, wherein the HARQ information further comprises at least one of an HARQ process identifier or a new data indicator (NDI).

27. The method according to any one of claims 18 to 26, wherein a protocol data unit (PDU) for generating the first transport block comprises a to-be-transmitted data packet and buffer status information (BSI) of the terminal device.

28. The method according to any one of claims 18 to 27, further comprising:
transmitting configuration information of a wireless resource pool to the terminal device, wherein wireless resources in the wireless resource pool are shared by a plurality of terminal devices in a cell corresponding to the network device.

29. An apparatus for wireless communication, comprising:
a transceiving module, configured to transmit a first transport block and hybrid automatic repeat request (HARQ) information corresponding to the first transport block to a network device over a first wireless resource, and indicate an identifier of a terminal device to the network device, wherein the first wireless resource is autonomously selected by the apparatus.

30. The apparatus according to claim 29, wherein
the HARQ information comprises the identifier of the terminal device; or
control information comprising the HARQ information comprises the identifier of the terminal device.

31. The apparatus according to claim 29, wherein the identifier of the terminal device is indicated in an implicit indication manner.

32. The apparatus according to any one of claims 29 to 31, wherein the transceiving module is further configured to:
start a timer; and
stop the timer in a case where the terminal device receives HARQ acknowledgement (HARQ-ACK) feedback information from the network device during running of the timer; or
in a case where the terminal device receives HARQ negative acknowledgement (HARQ-NACK) feedback information from the network device during running of the timer, stop the timer, reselect a second wireless resource to retransmit the first transport block, and restart the timer.

33. The apparatus according to any one of claims 29 to 31, wherein the transceiving module is further configured to:
start a timer; and
stop the timer in a case where the terminal device receives first scheduling information from the network device during running of the timer, wherein the first scheduling information is used to schedule the terminal device to transmit a new transport block; or
in a case where the terminal device receives the second scheduling information from the network device during running of the timer, stop the timer, retransmit the first transport block over a wireless resource indicated by second scheduling information, and restart the timer, wherein the second scheduling information is used to schedule the terminal device to retransmit the first transport block.

34. The apparatus according to any one of claims 29 to 31, wherein the transceiving module is further configured to:
start a timer; and
in a case where the timer times out, reselect a second wireless resource to retransmit the first transport block, and restart the timer.

35. The apparatus according to any one of claims 29 to 31, wherein the transceiving module is further configured to:
start a timer; and
in a case where the timer times out, perform a backoff procedure to determine an occasion for retransmitting the first transport block, retransmit the first transport block over a reselected second wireless resource at the determined occasion, and restart the timer.

36. The apparatus according to any one of claims 29 to 31, wherein the transceiving module is further configured to:
start a timer;
detect a wireless channel associated with the first wireless resource during running of the timer; and
in a case where a channel collision is detected, stop the timer, perform a backoff procedure to determine an occasion for retransmitting the first transport block, retransmit the first transport block over a reselected second wireless resource at the determined occasion, and restart the timer.

37. The apparatus according to any one of claims 29 to 36, wherein the first transport block and the HARQ information are transmitted to the network device over a same channel.

38. The apparatus according to any one of claims 29 to 36, wherein the first transport block and the HARQ information are transmitted to the network device over different channels.

39. The apparatus according to any one of claims 29 to 38, wherein the HARQ information further comprises at least one of an HARQ process identifier or a new data indicator (NDI).

40. The apparatus according to any one of claims 29 to 39, wherein a physical layer of the terminal device processes control information comprising the HARQ information in a manner different from that for the physical layer of the terminal device to process a protocol data unit (PDU) for generating the first transport block.

41. The apparatus according to claim 40, wherein
a coding rate of the physical layer for the control information is less than a coding rate of the physical layer for the PDU; and/or
a modulation order of the physical layer for the control information is less than a modulation order of the physical layer for the PDU.

42. The apparatus according to any one of claims 30, 40 and 41, wherein the control information is physical layer uplink control information of the terminal device.

43. The apparatus according to any one of claims 29 to 32, wherein a protocol data unit (PDU) for generating the first transport block comprises a to-be-transmitted data packet and buffer status information (BSI) of the terminal device.

44. The apparatus according to any one of claims 29 to 43, wherein at least one of the first wireless resource or a second wireless resource is autonomously selected by the terminal device from a wireless resource pool, wherein wireless resources in the wireless resource pool are shared by a plurality of terminal devices in a cell where the terminal device is located, and the second wireless resource is used to retransmit the first transport block.

45. The apparatus according to any one of claims 29 to 44, wherein a physical layer of the terminal device performs signal modulation by non-orthogonal multiple access (NOMA).

46. A apparatus for wireless communication, comprising:
a receiving module, configured to receive a first transport block and hybrid automatic repeat request (HARQ) information corresponding to the first transport block from a terminal device, and determine an identifier of the terminal device based on the received information, wherein the first transport block and the HARQ information corresponding to the first transport block are transmitted by the terminal device over a first wireless resource, the first wireless resource being autonomously selected by the terminal device.

47. The apparatus according to claim 46, wherein
the HARQ information comprises the identifier of the terminal device; or
control information comprising the HARQ information comprises the identifier of the terminal device.

48. The apparatus according to claim 46, wherein the identifier of the terminal device is indicated in an implicit indication manner.

49. The apparatus according to any one of claims 46 to 48, further comprising:
a transmitting module, configured to transmit HARQ acknowledgement (HARQ-ACK) feedback information to the terminal device in a case where the HARQ information and the first transport block are both correctly decoded; or transmit HARQ negative acknowledgement (HARQ-NACK) feedback information to the terminal device in a case where the HARQ information is correctly decoded but the first transport block is not correctly decoded.

50. The apparatus according to any one of claims 46 to 48, further comprising:
a transmitting module, configured to transmit first scheduling information to the terminal device in a case where the HARQ information and the first transport block are both correctly decoded, wherein the first scheduling information is configured to schedule the terminal device to transmit a new transport block; or transmit second scheduling information to the terminal device in a case where the HARQ information is correctly decoded but the first transport block is not correctly decoded, wherein the second scheduling information is used to schedule the terminal device to retransmit the first transport block.

51. The apparatus according to any one of claims 46 to 48, wherein the receiving module is further configured to:
receive the first transport block retransmitted by the terminal device over a reselected second wireless resource;
wherein the first transport block is retransmitted in a case where a timer of the terminal device times out or the terminal device detects a collision in a wireless channel associated with the first wireless resource subsequent to transmitting first information.

52. The apparatus according to any one of claims 46 to 51, wherein the first transport block and the HARQ information are transmitted to the network device over a same channel.

53. The apparatus according to any one of claims 46 to 51, wherein the first transport block and the HARQ information are transmitted to the network device over different channels.

54. The apparatus according to any one of claims 46 to 53, wherein the HARQ information further comprises at least one of: an HARQ process identifier or a new data indicator (NDI).

55. The apparatus according to any one of claims 46 to 54, wherein a protocol data unit (PDU) for generating the first transport block comprises a to-be-transmitted data packet and buffer status information (BSI) of the terminal device

56. The apparatus according to any one of claims 46 to 55, further comprising:
a resource transmitting module, configured to transmit configuration information of a wireless resource pool to the terminal device, wherein wireless resources in the wireless resource pool are shared by a plurality of terminal devices in a cell corresponding to the network device.

57. A communication device, comprising: a processor and a memory; wherein
the memory is configured to store at least one computer program; and
the processor is configured to run the at least one computer program, to cause the communication device to perform the method as defined in any one of claim 1 to 17 or the method as defined in any one of claim 18 to 28.

58. A computer-readable storage medium, storing at least one computer program, wherein the at least one computer program, when run by a processor, causes the processor to perform the method as defined in any one of claim 1 to 17 or the method as defined in any one of claim 18 to 28.

59. A chip, comprising at least one programmable logic circuit and/or at least one program instruction, wherein the chip, when running, is caused to perform the method as defined in any one of claim 1 to 17 or the method as defined in any one of claim 18 to 28.

60. A computer program product, wherein the computer program product comprises at least one computer program stored in a computer-readable storage medium; wherein a processor, when reading and running the at least one computer program from the computer-readable storage medium, is caused to perform the method as defined in any one of claim 1 to 17 or the method as defined in any one of claim 18 to 28.

61. A communication system, comprising: a terminal device and a network device; wherein
the terminal device is configured to perform the method as defined in any one of claim 1 to 17; and
the network device is configured to perform the method as defined in any one of claim 18 to 28.
